# EUROPEAN PATENT SPECIFICATION

(11) **EP 2 432 925 B1**
(45) Date of publication and mention of the grant of the patent: **12.03.2014**
(21) Application number: 10722331.5
(22) Date of filing: 17.05.2010
(51) Int. Cl.: D04H 11/00, D04H 3/011, D06N 7/00, D04H 3/007, D05C 17/02, B60R 13/08

(54) **TUFTED CARPET FOR AUTOMOTIVE APPLICATIONS**
TUFTINGTEPPICH FÜR DEN AUTOMOBILINNENBEREICH
TAPIS TOUFTÉ POUR APPLICATION AUTOMOBILE

(30) Priority: 18.05.2009 CH 773092009
(43) Date of publication of application: 28.03.2012
(73) Proprietor: Autoneum Management AG, 8406 Winterthur (CH)
(72) Inventor: MEENAKSHISUNDARAM, Meganathan, 8404 Winterthur (CH); TAYLOR, James P., 8604 Volketswil (CH)
(74) Representative: van Adrichem Geisseler, Johanna
(86) International application number: PCT/EP2010/056700
(87) International publication number: WO 2010/133531

(56) References cited:
- WO-A1-2005/024104
- US-A- 3 262 257
- US-A- 3 686 848
- US-A- 5 622 765
- US-A- 5 786 083

## Description

The invention relates generally to tufted carpets and more particularly to tufted carpets for automotive applications.

In the automotive industry tufted carpets are used for multiple purposes and in various applications. One such purpose is noise attenuation. Another purpose is an increase of comfort of driving environments. These purposes are achieved by vehicle floor systems, main floors, deck side trims in trunks, including load floor and parcel shelf.

Those applications can be found in human transport vehicles, like cars or vans, or in lorries. Vehicle floor systems are comprised of several layers: surface or pile layer, primary backing layer, back coating, substrate and decoupler. The decoupler is the layer that is in contact with the Body-in-White (BIW), its role is to decouple any noise or vibration in the BIW from the passenger cabin. The decoupler is generally based on foam and fibrous material. The substrate can be an absorber or a barrier and could be based on a combination of materials, fibres and foams to form a controlled porosity substrate. The back coating is to securely retain the tufts in the primary backing layer. Alternatively a thermal process within that the tufts and the primary backing layer are securely bonded together by melting can substitute the back coating. The primary backing layer is formed of a woven or nonwoven. The pile layer is formed of the tufts. The pile layer and the primary backing layer constitute the carpet, whereas the back coating constitutes the intersectional layer to the substrate. Generally within the vehicle floor system the pile layer and the primary backing layer are forming the carpet.

Deck side trims may also be found in human transport vehicles, like cars or vans, or in lorries. Deck side trims are comprised of carpet, back coating or its alternatives and, if necessary, second and more backing layers. The carpet is formed of a pile layer and a primary backing layer.

Other automotive applications of tufted carpets could be optional floor mats or other interior trim parts.

According to its application the trim or mat construction differs in its structure and design to meet the requirements. The construction is comprised of a tufted carpet, consisting a pile layer and a primary backing layer, a back coating and additional layers adapted to the specific requirements of the application. The most challenging requirements are with tufted carpets used in vehicle floor systems.

Independent of the application, the tufted carpet with its pile layer is principally of two different types of carpet surface construction, as there are cut pile or loop pile layers. Tufted carpets generally include a composite structure as a primary backing layer in which tufts of carpet yarn are introduced. The tufts are forming the pile layer. The primary backing layer is formed typically of a nonwoven or woven material of polyamide, polyester, polyolefin or cotton or mixtures of aforementioned polymers. Typically nonwoven primary backing layers are formed by spunbonding.

After the tufting process a back coating can then be applied to the underside of the carpet construction in order to securely retain the tufted material in the primary backing layer. It is advantageous in terms of recycling to choose for the tufts and the primary backing layer the same type of synthetics. The back coating is comprised of latex for instance. It is also known to apply other synthetic materials than latex by extrusion to the underside of the carpet construction with the same intention of a back coating. Alternatively to the back coating the retaining of the tufted material in the primary backing layer can be done by a thermal process; whereas the tufts and the primary backing layer are melted together.

Carpet yarn used in tufted carpets for automotive applications is typically a man made yarn consisting of polyamide, polyester or polyolefin. These yarns are of the type of BCF yarns (Bulked Continuous Filament yarns) comprising of a specific number of single filaments. BCF yarns are bundles of filaments that have been melt spun, drafted and textured. The most common BCF yarn that is used as carpet yarn in automotive applications is polyamide (PA). The development in technology has lead to alternative yarns than PA yarns being used in tufted carpet constructions. Those alternative yarns comprised of polyethylene terephthalate (PET) yarns and polypropylene (PP) yarns.

The dominant factor in vehicle carpeting is costs. Further on, tufted carpets are to be assessed by terms of abrasion, stress whitening and weight as the most important properties of carpets used in automotive applications. Other terms of quality are cleanability, aesthetics, haptics and recyclability of used materials.

The desire to improve carpet technology has effected a compromise between a maximum of abrasion properties and a minimum of weight in order to optimize the cost. To meet standard abrasion specifications a certain weight of material is needed to construct a tufted carpet. Abrasion can be tested according to the DIN 53 754 (German Industrial Standard). This procedure is a method of determining the wear resistance of trim materials by means of a rotary platform sample support and double abrasion wheel type machine. The wheels are pressed onto the pile layer of the sample while the rotation of the sample. After a certain number of revolutions of the sample its loss of weight is measured and the visual appearance is assessed. The loss of weight does indicate the wear resistance or Taber abrasion after the test apparatus of Taber Industries. Another effect caused by the Taber test is the stress whitening. The physical or visual appearance is changed. This effect is caused by a change of the reflection of light that is because of fraction and mechanical damage of the filaments due to abrasion.

By using PP yarn as a carpet yarn the weight of material had to be increased compared to PA yarn in view of abrasion specifications. On the other hand tufted carpets of PP yarn feature a higher stain resistance compared to tufted carpets of PA yarn; cleanability being an important property of a carpet to be used in vehicles.

Using PET yarn as a carpet yarn results in carpeting that is not as durable than PA carpeting and is recommended only for light to moderate wear conditions. PET yarn also has a natural stain resistance quality, which avoids the problem of PA yarns needing an application of a stain resistance chemical due to being highly susceptible to staining.

It is the object of the invention to create a carpet with high stain resistance made of polypropylene (PP) yarn or polyethylene terephthalate (PET) yarn that features an improved abrasion resistance without increasing the weight of the carpet or the cost of manufacturing.

The solution of the above object of the invention is given by the features in claim 1. The objective is solved by a tufted carpet with a pile layer and at least a primary backing layer, whereas the pile layer has a pile weight and is comprised of a bulked continuous filament (BCF) yarn. The BCF yarn is comprised of a predetermined number of filaments that are of a predetermined diameter. The BCF yarn is consisting of a polypropylene (PP) yarn with a tenacity between 2.6 cN/dtex (centinewton per decitex) and 3.2 cN/dtex at an elongation of 50 % to 70%, or polyethylene terephthalate (PET) with a tenacity between 2.6 cN/dtex to 3.4 cN/dtex at an elongation of 20 % to 40%.

Researches on different types of carpets and a wide variation of BCF yarns have shown, that the wear resistance of carpets for automotive applications is depending on physical properties of the used BCF yarn as well as its material. One of those physical properties is the tenacity. To reach a predetermined tenacity the yarn is during its production process drawn to a certain extent. The more the filaments are drawn, the higher the tenacity becomes. As there is a limit to draw ratio, drawing the yarn after a certain point will result in filament breakage. On the strength of past experience it was generally believed that higher tenacity is not required to improve the abrasion resistance performance, and more over creates running problems during production of yarn, so BCF PP yarn and BCF PET yarns are manufactured at optimum level tenacity to have good running performance (no filament breakage). Contrary to the existing belief it appeared that an enhancement of tenacity to certain extent with PP or PET yarn without increasing filament breakage (having same running performance), results in an increase of abrasion behaviour in carpets. It appeared that PP yarn or PET yarn have an advantageous performance concerning the abrasion resistance when they are produced in a high tenacity area. Therefore it is possible to combine the advantages of PET yarns or PP yarns over PA yarns in stain resistance with an improved wear resistance by increasing the tenacity.

In reference to abrasion behaviour of the tufted carpet best results are obtained with the use of a BCF PP yarn with a tenacity of 2.6 cN/dtex (centinewton per decitex) to 3.2 cN/dtex at an elongation of 50 % to 70%. Preferably the tenacity of the used PP yarn is in the range of 2.8 cN/dtex (centinewton per decitex) to 3.1 cN/dtex at an elongation of 50 % to 65%. Surprisingly this behaviour applies to BCF PET yarn as well. In reference to abrasion behaviour of the tufted carpet best results are obtained with the use of a BCF PET yarn with a tenacity of 2.6 cN/dtex (centinewton per decitex) to 3.4 cN/dtex at an elongation of 20 % to 40%. Preferably the tenacity of the used PET yarn is in the range of 2.8 cN/dtex (centinewton per decitex) to 3.2 cN/dtex at an elongation of 25 % to 35%.

In order to reduce the weight of the carpet the diameter of the single filament is reduced. The diameter of the filament is in the range of 5 to 20 dpf (decitex per filament) either PP yarn or PET yarn. Preferably the PP yarn used to manufacture the tufted carpet has a diameter of 6 to 12 dpf. Best results for PP yarn in combination with the specified tenacity in abrasion performance are given with a diameter of 7 dpf. Preferably the PET yarn used to manufacture the tufted carpet has a diameter of 10 to 20 dpf. Best results for PET yarn in combination with the specified tenacity in abrasion performance are given with a diameter of 15 dpf. The modification ratio should be close to one as to have a high uniformity in filament diameter. Typically for BCF yarn the modification ratio is between 0,9 and 1,1.

To achieve a comparable abrasion performance to the commonly used carpet fibers, as there is PA, it is used less material in weight by manufacturing carpets of fine dpf PP yarn or equal to less material in weight by manufacturing carpets of fine dpf PET yarn. The PP yarn comprises 120 to 150 filaments, preferably 130 to 140 filaments. The best ratio in weight to performance can be realized with a PP yarn of 135 filaments. The PET yarn comprises 70 to 100 filaments, preferably 75 to 90 filaments. The best ratio in weight to performance can be realized with a PET yarn of 80 filaments.

The number of filaments per square meter does also influence haptics or touch of tufted carpets; haptics are enhanced by higher number of filaments.

Abrasion tests in accordance to the standard DIN 53754 have shown comparable wear resistance to known carpets made of PA yarn. The wear properties of the pile layer in accordance to the present invention are superior to tufted carpets of PP yarn or PET yarn known in the art, due to the increase in tenacity.

PP filaments as well as PET filaments are manufactured in different cross sectional shape, as there are filaments of circular, rectangular, polygonal or other types of cross sectional shape as well as hollow or core and sheath filaments. BCF yarns of PP or PET are advantageously consisting of filaments of the trilobal type to manufacture a carpet according to the present invention.

The pile weight of tufted carpets according to the invention is 200 gsm (grams per square meter) to 750 gsm, dependent on the application in the technical field of automotive carpeting. For instance the pile weight of a carpet with PP yarn or PET yarn according to the invention, the carpet is used in a vehicle floor system having the highest standards of abrasion, is in the range of 250 gsm to 450 gsm. Together with the potential of recycling compared to other man made fibers used in tufted carpets than PP or PET, the low weight is increasingly important in view of the desire to increase the environmental credentials of automotive applications of tufted carpets. The BCF yarn, used in a carpet according to the invention, may be made of 20% to 80% of recycled postindustrial waste as well as the primary backing layer.

One type of dyeing of carpets in automotive applications is piece dyeing. In piece dyeing the carpet is produced in white colour and dyed after the tufting process before the application of the back coating. Another type of dyeing is to use for tufting a BCF yarn that is of the type of solution dyed yarns. Solution dyeing has an advantage in manufacturing in that the tufted carpet is ready to use after tufting. PP yarns are advantageously solution dyed yarns, whereas carpets made of PET yarns are commonly piece dyed carpets.

In manufacturing process the tufting gauge is preferably selected at 5/64^{th} inch (0.198 cm), for the finer PP yarn, in order to achieve the optical and haptic properties despite the application according to the invention. In the case of PET yarn then 5/64^{th} inch (0.198 cm), 1/10^{th} inch (0.254 cm) gauge are preferred. The selection of the tufting gauge also influences the stress whitening, the more filaments per square meter the less stress whitening does appear when the carpet is brought in shape due to the profile of the floor or trim. Common tufting gauges that may also be used for either polymer are 1/8^{th} inch, 5/32^{th} inch and 1/10^{th} inch (0.318 cm, 0.397 cm and 0.254 cm).

The above, as well as other, advantages of the present invention will become readily apparent to those skilled in the art from the following detailed description of a preferred embodiment when considered in the light of the accompanying drawings, in which:
Fig. 1 is a schematic cross-sectional view of a vehicle floor system;
Fig. 2 is a schematic cross-sectional view of a tufted cut pile carpet in accordance with the present invention.

The present invention relates generally to floor systems, deck side trims in trunks, optional mats or other interior trim parts in vehicles and more particularly, tufted PP carpets or tufted PET carpets and methods of producing the same.

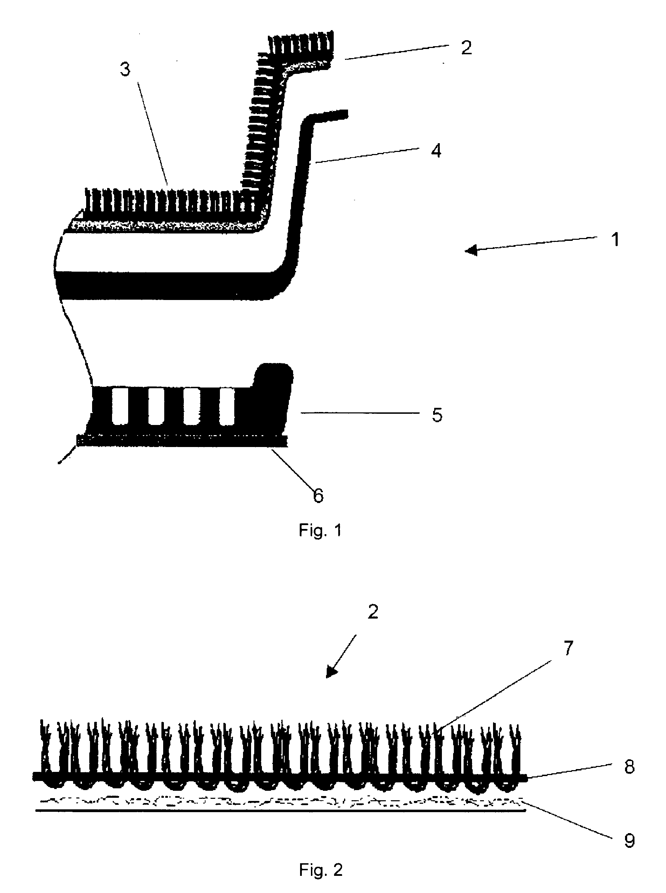

Referring to figure 1, an embodiment of a floor system 1 is illustrated generally in accordance with the known prior art. A vehicle floor system 1 comprises three main elements, first a carpet 2 with a decorative top layer 3 of fibre, second a substrate 4 and third a decoupler 5 with acoustic and vibration damping layers. The decoupler 5 is the layer that is in contact with the body-in-white (BIW), the bodywork 6 of the vehicle. The decoupler is generally based on foam and fibrous material.

The substrate 4 can be an absorber or a barrier and could be based on a combination of materials, fibres and foams to form a controlled porosity substrate.

The carpet 2 is formed of two layers, the pile layer and the primary backing layer. The decorative top layer 3 is formed of the tufted yarn and constitutes the pile layer. The tufts are stitched into the primary backing layer. The primary backing layer is formed of a woven or nonwoven. The pile layer and the primary backing layer constitute the carpet, whereas the back coating constitutes the intersectional layer to the substrate. Generally within the vehicle floor system the pile layer and the primary backing layer are forming the carpet.

Referring to figure 2, an embodiment of a tufted cut pile carpet 2 is illustrated in a schematic view in accordance to the present invention. The construction of cut and loop pile carpet 2 is the same besides the character of the tufts 7. The tufted carpet comprises the tufts 7 that are introduced into the primary backing layer 8. The tufts are then cut open on the upper side of the carpet 2. The pile layer 7 and the primary backing layer 8 are forming the tufted carpet according to the invention. To lock the tufts 7 in their position in the primary backing layer 8 there are several possibilities known in the art. For instance a back coating 9 is formed adjacent to the primary backing layer 8 in order to retain the tufts 7 in the primary backing layer 8. Or the tufts 7 and the primary backing layer are melted together on the underside of the carpet. Dependent on the position in the floor system or another automotive application and the intended function of the carpet 2, there could be attached a third or more backing layers adjacent to the back coating 9.

The tufts 7 are forming the pile layer that is seen and felt by the user of the vehicle. The pile layer is consisting of tufted PP or PET yarn comprising a predetermined number of filaments. Because of the fine filaments the weight per square meter of a carpet in accordance to the present invention does not exceed the weight of a carpet manufactured as known in the art.

## Claims

1. A tufted carpet for use in automotive applications with a pile layer and at least a primary backing layer, whereas the pile layer has a pile weight and is comprised of a bulked continuous filament (BCF) yarn comprised of a predetermined number of filaments that are of a predetermined diameter, **characterized in that** the BCF yarn is consisting of a polypropylene (PP) yarn with a tenacity between 2.6 cN/dtex (centinewton per decitex) and 3.2 cN/dtex at an elongation of 50 % to 70%, or polyethylene terephthalate (PET) with a tenacity between 2.6 cN/dtex to 3.4 cN/dtex at an elongation of 20 % to 40%.

2. The carpet of claim 1, **characterized in, that** the predetermined diameter of said filaments is 5 to 20 dpf (decitex per filament).

3. The carpet of claim 1 or 2, **characterized in, that** the predetermined number of filaments is 70 to 150 filaments of said BCF yarn.

4. The carpet of claim 3, **characterized in that** the PP yarn comprises 120 to 150 filaments.

5. The carpet of claim 3, **characterized in that** the PET yarn comprises 70 to 100 filaments.

6. The carpet of at least one of claims 1 to 5, **characterized in that** the said yarn comprises filaments of a trilobal type.

7. The carpet of at least one of claims 1 to 6, **characterized in that** the pile weight is 200 gsm (grams per square meter) to 750 gsm.

8. The carpet of at least one of claims 1 to 7, **characterized in that** the carpet is piece dyed after the tufting process.

9. The carpet of at least one of claims 1 to 7, **characterized in that** said yarn is of a solution dyed type of yarn.

10. The carpet of at least one of claims 1 to 9, **characterized in that** primary backing layer and the BCF yarn are of the same type of synthetic material, either PP or PET

11. The carpet of claim 10, **characterized in that** one or more additional layers made of the same type of synthetic material than the carpet are attached to the underside of the carpet.

12. A method of producing a tufted carpet with a BCF yarn according to the claims 1 to 7, **characterized in** tufting the BCF yarn at a gauge of 5/64^{th} inch (0.198 cm) onto a primary backing layer wherein the tufts are stitched, and applying a back coating to the tufting via extrusion or latex application or a thermal process to lock the tufted yarn to the primary backing layer.

13. The method of claim 10, **characterized in that** before the application of the back coating the tufted carpet is piece dyed.

14. The method of claim 12 or 13, **characterized in that** the primary backing is comprised of the same type of synthetics than the tufts.

15. The method of at least one of claims 12 to 14, **characterized in that** the yarn and the primary backing layer are comprised of 20% to 80% of recycled postindustrial waste.

## Patentansprüche

1. Tufting-Teppich zur Verwendung in Automobilanwendungen mit einer Polschicht und mindestens einer primären Trägerschicht (10), wobei die Polschicht ein Poleinsatzgewicht hat und sich aus einem gebauschten Endlosfilament-(BCF-) Garn zusammensetzt, das sich aus einer zuvor bestimmten Anzahl von Filamenten zusammensetzt, die einen zuvor bestimmten Durchmesser haben, **dadurch gekennzeichnet, dass** das BCF-Garn aus einem Polypropylen-(PP-) Garn besteht, das bei einer Dehnung von 50 % bis 70 % eine Zugfestigkeit von zwischen 2,6 cN/dtex (Centinewton pro Decitex) und 3,2 cN/dtex hat, oder aus Polyethylen-Terephthalat (PET) mit einer Zugfestigkeit von 2,6 cN/dtex bis 3,4 cN/dtex bei einer Dehnung von 20 % bis 40 %.

2. Teppich nach Anspruch 1, **dadurch gekennzeichnet, dass** der zuvor bestimmte Durchmesser des Filaments 5 bis 20 dpf (Decitex pro Filament) beträgt.

3. Teppich nach Anspruch 1 oder 2, **dadurch gekennzeichnet, dass** die zuvor bestimmte Anzahl der Filamente für dieses BCF-Garn 70 bis 150 Filamente beträgt.

4. Teppich nach Anspruch 3, **dadurch gekennzeichnet, dass** das PP-Garn 120 bis 150 Filamente umfasst.

5. Teppich nach Anspruch 3, **dadurch gekennzeichnet, dass** das PET-Garn 70 bis 100 Filamente umfasst.

6. Teppich nach mindestens einem der Ansprüche 1 bis 5, **dadurch gekennzeichnet, dass** das Garn Trilobal-Filamente umfasst.

7. Teppich nach einem der Ansprüche 1 bis 6, **dadurch gekennzeichnet, dass** das Poleinsatzgewicht von 200 g/m² (Gramm pro Quadratmeter) bis 750 g/m² beträgt.

8. Teppich nach mindestens einem der Ansprüche 1 bis 7, **dadurch gekennzeichnet, dass** der Teppich nach dem Tufting-Prozess stückgefärbt wird.

9. Teppich nach mindestens einem der Ansprüche 1 bis 7, **dadurch gekennzeichnet, dass** das Garn düsengefärbtes Garn ist.

10. Teppich nach mindestens einem der Ansprüche 1 bis 9, **dadurch gekennzeichnet, dass** die primäre Trägerschicht und das BCF-Garn aus der gleichen Art von synthetischem Material bestehen, entweder PP oder PET.

11. Teppich nach Anspruch 10, **dadurch gekennzeichnet, dass** eine oder mehrere zusätzliche Schichten, die aus der gleichen Art synthetischen Materials hergestellt sind wie der Teppich, an der Unterseite des Teppichs befestigt sind.

12. Verfahren zur Herstellung eines Tufting-Teppichs mit einem BCF-Garn nach den Ansprüchen 1 bis 7, **gekennzeichnet durch** das Tuften des BCF-Garns bei einem Abstand von 5/64 Zoll (0,198 cm) auf eine primäre Trägerschicht, wobei die Tufts genäht sind, und Anwenden einer Rückenbeschichtung des Tuftings **durch** Extrusion oder Latexauftrag oder einen Wärmevorgang, um das getuftete Garn mit der primären Trägerschicht zu befestigen.

13. Verfahren nach Anspruch 10, **dadurch gekennzeichnet, dass** der Tufting-Teppich vor der Anwendung der Rückenbeschichtung stückgefärbt wird.

14. Verfahren nach Anspruch 12 oder 13, **dadurch gekennzeichnet, dass** die primäre Trägerschicht aus dem gleichen synthetischen Stoff besteht wie die Tufts.

15. Verfahren nach mindestens einem der Ansprüche 12 bis 14, **dadurch gekennzeichnet, dass** das Garn und die primäre Trägerschicht zu 20 % bis 80 % aus recyceltem postindustriellem Abfall bestehen.

## Revendications

1. Moquette touffetée à utiliser dans des applications pour automobile avec une couche de velours et au moins une couche premier dossier, dans lequel la couche de velours a un grammage de velours et est composée d'un fil de filaments continu gonflant (BCF) composé d'un nombre prédéterminé de filaments qui ont un diamètre prédéterminé, **caractérisé en ce que** le fil BCF est constitué d'un fil de polypropylène (PP) ayant une ténacité entre 2,6 cN/dtex (centi-newton par décitex) et 3,2 cN/dtex à un allongement de 50 % à 70 %, ou de polytéréphtalate d'éthylène (PET) ayant une ténacité entre 2,6 cN/dtex à 3,4 cN/dtex à un allongement de 20 % à 40 %.

2. Moquette selon la revendication 1, **caractérisé en ce que** le diamètre prédéterminé desdits filaments est de 5 à 20 dpf (décitex par filament).

3. Moquette selon la revendication 1 ou 2, **caractérisé en ce que** le nombre prédéterminé de filaments est de 70 à 150 filaments dudit fil BCF.

4. Moquette selon la revendication 3, **caractérisé en ce que** le fil de PP comprend de 120 à 150 filaments.

5. Moquette selon la revendication 3, **caractérisé en ce que** le fil de PET comprend de 70 à 100 filaments.

6. Moquette selon au moins une des revendications 1 à 5, **caractérisé en ce que** ledit fil comprend des filaments d'un type trilobé.

7. Moquette selon au moins une des revendications 1 à 6, **caractérisé en ce que** le grammage de velours est de 200 g/m2 (grammes par mètre carré) à 750 g/m2.

8. Moquette selon au moins une des revendications 1 à 7, **caractérisée en ce que** le moquette est teint en pièce après le processus de touffetage.

9. Moquette selon au moins une des revendications 1 à 7, **caractérisée en ce que** ledit fil est d'un type de fil teint en solution.

10. Moquette selon au moins une des revendications 1 à 9, **caractérisée en ce que** la couche de support primaire et le fil BCF sont du même type de matière synthétique, PP ou PET.

11. Moquette selon la revendication 10, **caractérisée en ce qu'**une ou plusieurs couches supplémentaires faites du même type de matière synthétique que le moquette sont attachées au-dessous du moquette.

12. Procédé de production d'une moquette touffetée avec un fil BCF selon les revendications 1 à 7, **caractérisé par** le touffetage du fil BCF à une jauge de 5/64e de pouce (0,198 cm) sur une couche premier dossier dans laquelle les touffes sont implantées, et par l'application d'une enduction d'envers au touffetage par extrusion ou application de latex ou un processus thermique pour ancrer le fil touffeté à la couche premier dossier.

13. Procédé selon la revendication 10, **caractérisé en ce qu'**avant l'application de l'enduction d'envers, la moquette touffeté est teint en pièce.

14. Procédé selon la revendication 12 ou 13, **caractérisé en ce que** premier dossier est composé du même type de synthétiques que les touffes.

15. Procédé selon au moins une des revendications 12 à 14, **caractérisé en ce que** le fil et la couche premier dossier sont composés de 20 % à 80 % de déchets post-industriels recyclés.
